# EUROPEAN PATENT APPLICATION

(11) **EP 2 138 643 A2**
(43) Date of publication of application: **30.12.2009**
(21) Application number: 09251630.1
(22) Date of filing: 23.06.2009
(51) Int. Cl.: E04B 1/26

(54) **Connector assembly**

(30) Priority: 23.06.2008 DE 202008008405 U; 12.01.2009 GB 0900470
(71) Applicant: Simpson Strong-Tie Company, Inc., Pleasanton, CA 94588 (US)
(72) Inventor: Schmedt, Jörg, D-60314 Frankfurt (DE)
(74) Representative: Hicks, Paul Edward

(57) **Abstract**

The present invention relates to a connector assembly (1) for fastening a structural member (2) to a supporting member (4). The connector assembly (1) comprises a bracket member (6) comprising a first lateral flange (10) which is to be fastened to a first lateral surface of the structural member (2), a second lateral flange (14) which is to be fastened to a second lateral surface of the structural member (2) and is substantially parallel to the first lateral flange (10), and a lateral flange joining portion (16) which, starting at end portions of the first and second lateral flanges (10, 14), is arranged substantially perpendicular to the first and second lateral flanges (10, 14) and is connected thereto along first and second connection zones (17, 19). The lateral flange joining portion (16) extends between the first and second lateral flanges (10, 14) and below and/or beyond the first and second connection zones (17, 19).
The present invention also relates to a connection between a structural member (2) and a supporting member (4) formed using the connector assembly (1), and also to a method of forming such a connection.

## Description

The present invention relates to a connector assembly for fastening a structural member to a supporting member such as a foundation, substructure or other supporting surface/member.

In one embodiment, the structural member is arranged at an angle to the supporting member, foundation, substructure or other supporting surface/member, such as a second structural member extending transversely or angled thereto, or a flat element, such as a wall, floor or ceiling which is substantially perpendicular thereto.

In an alternative embodiment, the structural member is arranged so as to be parallel to the supporting member, foundation, substructure or other supporting surface/member, such as a second structural member extending parallel thereto, e.g. two vertical stud members arranged one above the other and separated, for example, by a timber sole plate and/or timber bottom rail.

DE 20118342 U1 of the present applicant discloses a connector assembly for fastening wall elements in a prefabricated house construction, which connector assembly has a first perforated strip or bracket which is to be fastened to a lower edge portion of a wall element and which, in the finished installed condition, is connected to a second similarly perforated connecting bracket and which connects with the first strap or bracket substantially at a right angle.

Although this prior art connector assembly has been proven in principle, there is still a need for improvement to the extent that the lower edge portion of the wall element or of the stud or beam has to accommodate the complete strap and /or bracket with the screws, nails or the like fasteners required for its fastening, so that a correspondingly large recess has to be provided.

According to the present invention, this problem is addressed by a connector assembly for fastening a structural member to a supporting member such as a foundation, substructure or other supporting surface/member, the connector assembly comprising a bracket member comprising a first lateral flange which is to be fastened to a first lateral surface of the structural member, a second lateral flange which is to be fastened to a second lateral surface of the structural member and being substantially parallel to the first lateral flange, with a first lateral flange joining portion which, starting at an end portion of the first lateral flange, is arranged substantially perpendicular to the first lateral flange and is connected thereto along a first connection zone, with a second lateral flange joining portion which, starting at an end portion of the second lateral flange, is substantially perpendicular to the second lateral flange and is connected thereto along a second connection zone, wherein the first and second lateral flange joining portions extend between the first and second lateral flanges towards one another and beyond the first and second connection zones, and the connector assembly further comprising an anchor member which can be connected to the first and second lateral flange joining portions and to the supporting element.

The anchor member connects the first and second lateral flange joining portions to the supporting member at an angle thereto.

The present invention further provides a connector assembly for fastening a structural member to a supporting member such as a foundation, substructure or other supporting surface/member, the connector assembly comprising a bracket member comprising a first lateral flange which is to be fastened to a first lateral surface of the structural member, a second lateral flange which is to be fastened to a second lateral surface of the structural member and being substantially parallel to the first lateral flange, and a lateral flange joining portion which, starting at end portions of the first and second lateral flanges, is arranged substantially perpendicular to the first and second lateral flanges and is connected thereto along first and second connection zones, wherein the lateral flange joining portion extends between the first and second lateral flanges and below and/or beyond the first and second connection zones.

In order to ensure that the capacity to transmit the normal and/or transverse forces to be expected in the installed condition is guaranteed, the first and second connection zones, along which the lateral flange joining portion(s) is/are connected to the first and second lateral flanges, should be of a length which is at least sufficient to accommodate the static loads to be expected in use.

Although one lateral flange or both lateral flanges could be fastened with self-tapping screws, it is advantageous if the first lateral flange and/or the second lateral flange has fastening holes provided, for example for nails, screws, rod dowels or other fasteners.

An advantageous embodiment of the present invention is **characterised in that** when forming the bracket member, the portions of the bracket member are formed in one piece and result in a single part or a one-piece bracket member. The ability to be handled and fastened is thereby simplified. Conversely, a two-part design makes it possible to be able to adapt the bracket member part(s) and resulting connector assembly readily to supporting members of different cross-section.

Advantageously, the bracket member(s) is/are formed from sheet metal, e.g. steel.

The anchor member may have an anchor bracket, which is to be connected to the bracket member or bracket members and extends parallel thereto in the assembled condition, and which can extend perpendicular or parallel to the anchor member or its base plate.

The anchor member may have lateral reinforcing webs so as to increase the transverse force which can be transmitted. In addition, the reinforcing webs can be connected to the anchor bracket. The anchor bracket and the bracket member(s) can be provided with congruent fastening bores or, alternatively, it can be provided for the anchor bracket and the bracket member or bracket members to be fastened to one another by self-tapping screws.

Reinforcing ribs, beads, embossments or the like can be used at any suitable location, for example on the bracket member(s) and/or the anchor member.

In further aspects, the present invention provides a connection and methods of forming a connection.

Further advantages and features of the invention will be evident from the following description, claims and figures.

Preferred embodiments of the present invention will now be described by way of example only with reference to the accompanying drawings, in which:
Figure 1 schematically illustrates a preferred embodiment of connector assembly according to the present invention in use in an assembled condition;
Figure 2 schematically illustrates the bracket member and anchor member components of the connector assembly of Figure 1, the components separated and shown individually;
Figure 3 schematically illustrates a bracket member of a connector assembly according to an alternative embodiment of the present invention, the bracket member being formed of two parts;
Figure 4 schematically illustrates in side elevation a bracket member of a connector assembly according to the present invention used in a horizontal application;
Figure 5 is a top plan view of the bracket member in use in Figure 4; and
Figure 6 schematically illustrates a yet further alternative embodiment of connector assembly according to the present invention in use in an assembled condition, the connector assembly comprising two bracket members and an anchor bracket.

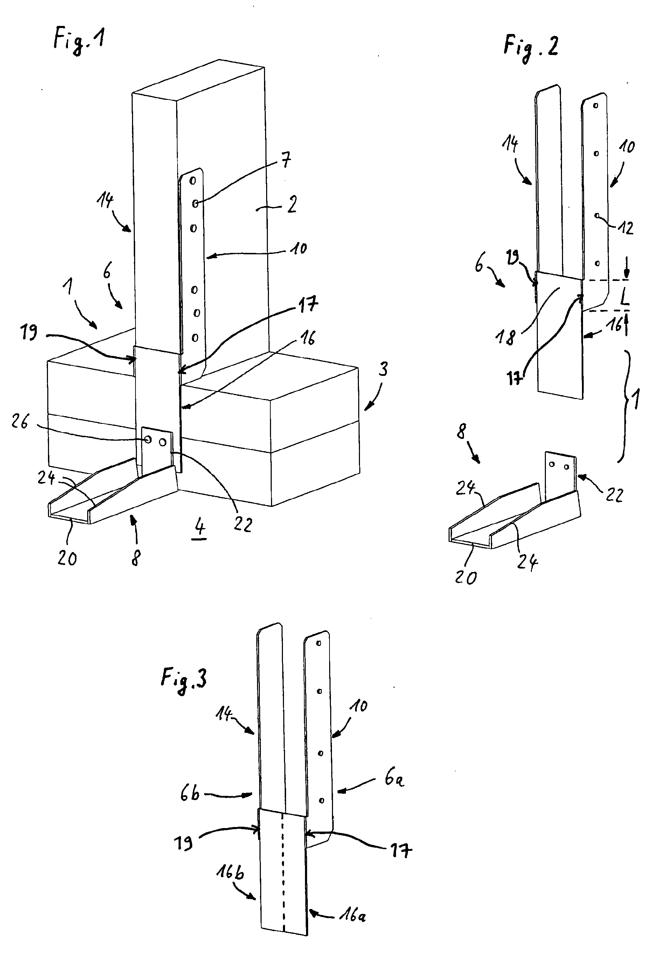

Referring first to Figure 1, there is shown a connection situation in which a vertical structural member 2, which in timber construction is designated as a vertical timber stud member, prop or strut, is mounted on a horizontal bottom rail and/or sole plate 3 which, in turn, rests on a foundation, substructure or other supporting surface/member or floor 4.

A connector assembly 1 according to the invention, for fastening the structural member 2 to a supporting member 4, such as a foundation, substructure or other supporting surface/member, floor, ceiling, or the like, in particular extending perpendicular thereto, comprises a first component in the form of a bracket member 6, which is to be fastened to the structural member 2 by fasteners 7, e.g. nails, and a second component in the form of an anchor member 8 which is to be connected to the bracket member 6 and fastened to the supporting member 4.

The bracket member 6 essentially comprises three portions, namely a first lateral flange 10, which is provided with fastener holes 12, a second lateral flange 14, which is also provided with fastener holes 12 and is aligned substantially parallel to the first lateral flange 10, and a lateral flange joining portion 16 which is connected to both first and second lateral flanges 10, 14 substantially perpendicularly thereto in region 18 and along first and second connection zones 17, 19 arranged in the vicinity of end portions of the first and second lateral flanges 10, 14, the lateral flange joining portion 16 extending oppositely to the first and second lateral flanges 10, 14 below and/or beyond the connection zones 17, 19 and region 18. The fastener holes 12 are disposed near to the edge without being at a great distance from the plane of the lateral flange joining portion 16 so as to minimise load moments.

In this example the connection zones 17, 18 in the region 18 have, for strength reasons, a length L which is sufficient to accommodate the loads to be expected in use.

The anchor member 8 serves to connect the bracket member 6 of the connector assembly 1 to a supporting member 4 which is to be connected to the structural member 2, in this case for example a floor. In the illustrated example of the Figure 1 embodiment the anchor member 8 comprises a base plate 20 and an anchor bracket 22 extending substantially perpendicularly thereto. The base plate 20 has laterally raised reinforcing webs or flanges 24 which can be joined to the anchor bracket 22, for example, by welding. The base plate 20 is thereby given a considerable degree of resistance to deflection and thus considerable capacity to accommodate tensile forces which, in the installed condition of the bracket member 6, can be transferred into the anchor bracket 22. The base plate 20 is anchored on the floor 4, for example, by a bolt, screw or other anchor or fastener (not shown). Self-tapping/cutting sheet metal screws 26 connect the anchor bracket 22 and the lateral flange joining portion 16.

Figure 3 illustrates a variant of the invention, in which the bracket member 6 is provided in two parts in the form of two symmetrical halves 6a, 6b, the lateral flange joining portion 16 being divided centrally (indicated in dashed line in Figure 3). Therefore, in this embodiment the two bracket member halves 6a, 6b each have a respective lateral flange 10 and 14, and a lateral flange joining portion 16a, 16b. This embodiment has the advantage that the two bracket member halves 6a, 6b can be attached to a structural member 2 of any width desired, it only being necessary to ensure that the anchor member 8 or its anchor bracket 22 is also of corresponding width. If the structural member 2 is narrower than the sum of the widths of the lateral flange joining portions 16a, 16b, the latter can be mounted in overlapping fashion.

The connector assembly 1 makes it possible for normal and/or transverse forces to be transferred from a structural member 2 to another structural member 2 or supporting member 4. The force flux extends from two opposing cross-sectional sides (via the first and second lateral flanges 10, 14 of the connector assembly 1) of the structural member 2 to another structural member 2 (via the anchor member 8 and/or anchor bracket 22 of the connector assembly 1) and/or an upper side or underside of a supporting member 4 (via the anchor member 8 and/or anchor bracket 22 of the connector assembly 1). Optionally, further structural elements, for example tension rod feet, can be attached on the web side. A particular advantage of the present invention lies in that the fastening of the connector assembly 1 to the structural member 2 is effected via lateral flanges, so that a large recess on the front side of the structural member 2 is not necessary. The part or parts of the lateral flange joining portion(s) 16 and/or of the bracket member 6, which extends under the structural member 2, does not interfere as a rule, for example when it is situated in the vicinity of a floor structure (bottom rail or sole plate). If the thickness of the sheet metal of the connector assembly 1 is great enough, it is even possible to omit entirely the recess in the vicinity of the structural member 2.

A further advantage of the present invention is that the connection allows a height adjustment at the building site of, for example, up to 40 mm, since with regard to height the anchor member 8 can be mounted flexibly on the bracket member 6 or the lateral flange joining portion(s) 16 if it is fastened with self-tapping screws.

The present invention provides an installation possibility for walls with a factory-installed bottom rail or sole plate 3 and also with a bottom rail or sole plate 3 installed on site, in which case the wall is then mounted on a separate bottom rail or sole plate 3.

If the bracket member 6 is provided in two parts, the possibility of flexible adjustment to any structural member 2 width desired is provided.

If there is a particular requirement to accommodate transverse forces, the use of a connector assembly 1 according to claim 3 or claim 18 is provided, i.e. an embodiment with a one-piece bracket member 6 without an anchor member 8. The bracket member 6 then bears directly on a supporting member 4 in the form of a timber or steel beam, brickwork or the like and is fastened thereto, for example by screws. With reference to Figure 1, such an application would, for example be a beam 2 in a horizontally or obliquely inclined arrangement, which is to be fastened by a connector assembly 1 (exclusively comprising the bracket member 6 illustrated above in Figure 2) for example to a perpendicular wall (instead of the bottom rail or sole plate 3 illustrated in Figure 1).

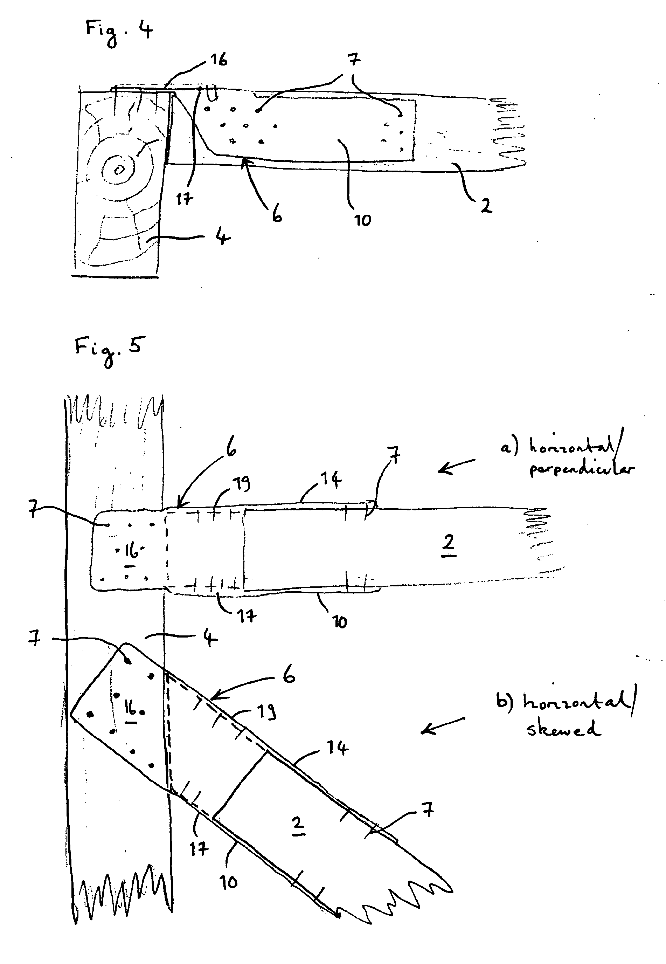

In Figures 4 and 5, there is illustrated respectively a side elevation view and a top plan view of a one-piece bracket member 6 without an anchor member 8 used in a horizontal application such as a floor structure. Of course this orientation (e.g. horizontal in the x-z plane) is only exemplary as the configuration could take any other suitable orientation in space (e.g. vertical in the x-y plane or, indeed, any angled plane). The bracket member 6 is fastened to a structural member 2, for example by nails or screws, and then bears directly on a supporting member 4 in the form of a timber or steel beam, brickwork or the like and is fastened thereto, for example by nails or screws. With reference to the top plan view of Figure 5, such an application would, for example be a beam 2 in a horizontal, perpendicular (joist/header) arrangement, as shown at a), or horizontal but obliquely/skewed/inclined arrangement, as shown at b), either of which is to be fastened by a connector assembly 1. In the example shown, the connection comprises the bracket member 6 illustrated above in Figure 1, but it will be appreciated that it is equally possible to use the two part bracket member 6a, 6b of Figure 3.

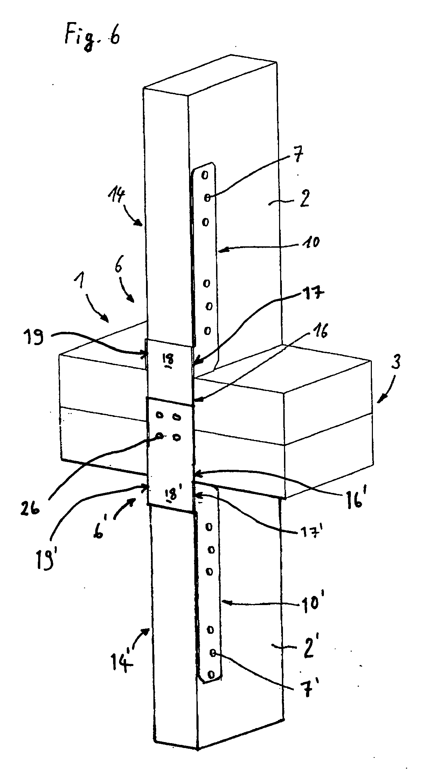

In a further embodiment (not shown), at least one or more further structural members 2 may be arranged in close proximity to the first structural member 2, e.g. one structural member 2 on each side of the supporting member 4 (similar to a horizontal version of the configuration arranged vertically and shown in Figure 6). In such configurations, the lateral flange joining portion 16 or portions 16a, 16b, 16' of each bracket member 6, 6' may overlap one another to one degree or other and be fastened together and/or to the underlying supporting member 4, preferably with fasteners such as self-tapping screws 26. More preferably, the lateral flange joining portions 16 or portions 16a, 16b, 16' may be provided with one or more congruent fastening bores, each either sized to match the shank size of the fastener (e.g. circular and of given diameter) to provide for exact positioning, or elongate (e.g. slot-like) to provide tolerance. Alternatively, the lateral flange joining portion(s) 16, 16a, 16b, 16' of each bracket member 6, 6' may stop short of one another or be offset from one another (e.g. if the two bracket members 6, 6' are themselves offset or laterally spaced from one another). In such a case, an anchor bracket 22 or other plate-like member or members may be used to connect the lateral flange joining portion(s) 16, 16a, 16b, 16' of each bracket member 6, 6' (e.g. fastened with fasteners, such as self-tapping screws 26).

A particular advantage of such arrangements are their use in a structure where access is only possible from one side (e.g. from above in the example illustrated).

In a further embodiment, as shown in Figure 6, it may be desirable to effect storey to storey connection using the connector assembly 1 of the present invention. In such a case, two bracket members 6, 6' may be employed, the first 6 as shown and described above, and the second 6' inverted as shown in Figure 6. The lateral flange joining portion(s) 16, 16' of each bracket member 6, 6' may overlap, as shown, and fastened with self-tapping screws 26. Alternatively, the lateral flange joining portion(s) 16, 16' of each bracket member 6, 6' may stop short of one another or be offset from one another (e.g. if the two bracket members 6, 6' are themselves offset or laterally spaced from one another). In such a case, an anchor bracket 22 may be used to connect the lateral flange joining portion(s) 16, 16' of each bracket member 6, 6' (e.g. fastened with self-tapping screws 26).

The following clauses describe further preferred aspects of the present invention:
1. A connector assembly (1) for fastening a structural member (2) to a supporting member (4), the connector assembly (1) comprising a bracket member (6) comprising a first lateral flange (10) which is to be fastened to a first lateral surface of the structural member (2), a second lateral flange (14) which is to be fastened to a second lateral surface of the structural member (2) and is substantially parallel to the first lateral flange (10), with a first lateral flange joining portion (16a) which, starting at an end portion of the first lateral flange (10), is arranged substantially perpendicular to the first lateral flange (10) and is connected thereto along a first connection zone (17), with a second lateral flange joining portion (16b) which, starting at an end portion of the second lateral flange (14), is substantially perpendicular to the second lateral flange (14) and is connected thereto along a second connection zone (19), wherein the first and second lateral flange joining portions (16a, 16b) extend between the first and second lateral flanges (10, 14) towards one another and below and/or beyond the first and second connection zones (17, 19), and the connector assembly (1) further comprising an anchor member (8) which can be connected to the first and second lateral flange joining portions (16a, 16b) and to the supporting member (4).
2. A connector assembly (1) according to clause 1 wherein the anchor member (8) connects the first and second lateral flange joining portions (16a, 16b) to the supporting member (4) at an angle thereto.
3. A connector assembly (1) for fastening a structural member (2) to a supporting member (4), the connector assembly (1) comprising a bracket member (6) comprising a first lateral flange (10) which is to be fastened to a first lateral surface of the structural member (2), a second lateral flange (14) which is to be fastened to a second lateral surface of the structural member (2) and is substantially parallel to the first lateral flange (10), and a lateral flange joining portion (16) which, starting at end portions of the first and second lateral flanges (10, 14), is arranged substantially perpendicular to the first and second lateral flanges (10, 14) and is connected thereto along first and second connection zones (17, 19), wherein the lateral flange joining portion (16) extends between the first and second lateral flanges (10, 14) and below and/or beyond the first and second connection zones (17, 19).
4. A connector assembly (1) according to any one of the preceding clauses, **characterised in that** the first lateral flange (10) comprises fastening holes (12).
5. A connector assembly (1) according to any one of the preceding clauses, **characterised in that** the second lateral flange (14) comprises fastening holes (12).
6. A connector assembly (1) according to any one of the preceding clauses, insofar as appended to clause 1, **characterised in that** in forming a bracket member (6) the lateral flange joining portions (16a, 16b) are formed in one piece and with the first and second lateral flanges (10,14) form a one-piece bracket member (6).
7. A connector assembly (1) according to any one of the preceding clauses, **characterised in that** the bracket member(s) (6) are formed from sheet metal.
8. A connector assembly (1) according to any one of the preceding clauses, **characterised in that** the bracket member(s) (6) are formed from sheet steel.
9. A connector assembly (1) according to any one of the preceding clauses, **characterised in that** the anchor member (8) comprises an anchor bracket (22) to be connected to the lateral flange joining portion (16) or portions (16a, 16b) and extends parallel thereto in an installed condition.
10. A connector assembly (1) according to clause 9, **characterised in that** the anchor bracket (22) extends perpendicular to a base plate (20) of the anchor member (8).
11. A connector assembly (1) according to any one of the preceding clauses, **characterised in that** the anchor member (8) comprises lateral reinforcing webs (24).
12. A connector assembly (1) according to clause 11, **characterised in that** the reinforcing webs (24) are connected to the anchor bracket (22).
13. A connector assembly (1) according to any one of clauses 9 to 12, **characterised in that** the anchor bracket (22) and the lateral flange joining portion (16) or portions (16a, 16b) are provided with congruent fastening bores.
14. A connector assembly (1) according to any one of clauses 9 to 13, **characterised in that** the anchor bracket (22) and the lateral flange joining portion (16) or portions (16a, 16b) are fastened to one another using self-tapping screws (26).
15. A connector assembly (1) according to any one of the preceding clauses, **characterised in that** the first and second lateral flanges (10,14) and/or the lateral flange joining portion (16) or portions (16a, 16b) and the anchor bracket (8) are provided with reinforcing beads, ribs or embossments.
16. A connector assembly (1) for fastening a structural member (2) of one storey to a structural member (2') of another storey, the connector assembly (1) comprising two bracket members (6, 6'), each bracket member (6, 6') comprising a first lateral flange (10, 10') which is to be fastened to a first lateral surface of the structural member (2, 2'), a second lateral flange (14, 14') which is to be fastened to a second lateral surface of the structural member (2, 2') and is substantially parallel to the first lateral flange (10, 10'), with a first lateral flange joining portion (16a, 16a') which, starting at an end portion of the first lateral flange (10, 10'), is arranged substantially perpendicular to the first lateral flange (10, 10') and is connected thereto along a first connection zone (17, 17'), with a second lateral flange joining portion (16b, 16b') which, starting at an end portion of the second lateral flange (14, 14'), is substantially perpendicular to the second lateral flange (14, 14') and is connected thereto along a second connection zone (19, 19'), wherein the first and second lateral flange joining portions (16a, 16a', 16b, 16b') extend between the first and second lateral flanges (10, 10', 14, 14') towards one another and below and/or beyond the first and second connection zones (17, 17', 18, 18'), and the connector assembly (1) further comprising an anchor bracket (22) which can be connected to the respective first and second lateral flange joining portions (16a, 16a', 16b, 16b') of each bracket member (6, 6') and/or to a supporting member (4).
17. A connector assembly (1) according to clause 16 wherein the anchor bracket (22) connects together the respective first and second lateral flange joining portions (16a, 16a', 16b, 16b') of each bracket member (6, 6') when overlapping each other or when spaced apart.
18. A connector assembly (1) for fastening a structural member (2) of one storey to a structural member (2') of another storey, the connector assembly (1) comprising two bracket members (6, 6'), each bracket member (6, 6') comprising a first lateral flange (10, 10') which is to be fastened to a first lateral surface of the structural member (2, 2'), a second lateral flange (14, 14') which is to be fastened to a second lateral surface of the structural member (2, 2') and being substantially parallel to the first lateral flange (10, 10'), and a lateral flange joining portion (16, 16') which, starting at end portions of the first and second lateral flanges (10, 10', 14, 14'), is arranged substantially perpendicular to the first and second lateral flanges (10, 10', 14, 14') and is connected thereto along first and second connection zones (17, 17', 18, 18'), wherein the lateral flange joining portion (16, 16') extends between the first and second lateral flanges (10, 10', 14, 14') and below and/or beyond the first and second connection zones (17, 17', 18, 18').
19. A connection between a structural member (2) and a supporting member (4) formed using the connector assembly (1) according to any one of the preceding clauses.
20. A method of forming the connection of clause 19, the method comprising the steps of:
   connecting the bracket (6, 6') to the structural member (2, 2'); and
   connecting the bracket (6, 6') to the supporting member (4), wherein the steps may be effected in any order.
21. A method of forming the connection of clause 19, the method comprising the steps of:
   connecting the bracket (6, 6') to the structural member (2, 2');
   connecting the anchor member (8) to the supporting member (4); and
   connecting the bracket (6, 6') to the anchor member (8), wherein the steps may be effected in any order.
22. A method of forming a connection between a structural member (2) and a supporting member (4), the method comprising the steps of:
   connecting a bracket (6, 6') to the structural member (2, 2'); and
   connecting the bracket (6, 6') to the supporting member (4), wherein the steps may be effected in any order.
23. A method of forming a connection between a structural member (2) and a supporting member (4), the method comprising the steps of:
   connecting a bracket (6, 6') to the structural member (2, 2');
   connecting an anchor member (8) to the supporting member (4); and
   connecting the bracket (6, 6') to the anchor member (8), wherein the steps may be effected in any order.
24. A method of forming a connection between two structural members (2, 2'), the method comprising the steps of:
   connecting a first bracket (6) to a first structural member (2);
   connecting a second bracket (6') to a second structural member (2'); and
   connecting the first bracket (6) to the second bracket (6'), wherein the steps may be effected in any order.
25. A connector assembly (1) substantially as hereinbefore described with reference to or as shown in the accompanying drawings.
26. A method of forming a connection between a structural member (2) and a supporting member (4) or second structural member (2) substantially as hereinbefore described with reference to or as shown in the accompanying drawings.
27. A connection substantially as hereinbefore described with reference to or as shown in the accompanying drawings.
28. Use of a connector assembly (1) substantially as hereinbefore described with reference to or as shown in the accompanying drawings.

Each feature disclosed in this specification (including the accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features. In addition, all of the features disclosed in this specification (including the accompanying claims and drawings), and/or all of the steps of any method or process so disclosed, may be combined in any combination, except combinations where at least some of such features and/or steps are mutually exclusive. Accordingly, while many different embodiments of the present invention have been described above, any one or more or all of the features described, illustrated and/or claimed in the appended claims may be used in isolation or in various combinations in any embodiment. As such, any one or more feature may be removed, substituted and/or added to any of the feature combinations described, illustrated and/or claimed. For the avoidance of doubt, any one or more of the features of any embodiment may be combined and/or used separately in a different embodiment with any other feature or features from any of the embodiments. As such, the true scope of the invention is that as set out in the appended claims.

Whilst preferred embodiments of the present invention have been described above and illustrated in the drawings, these are by way of example only and non-limiting. It will be appreciated by those skilled in the art that many alternatives are possible within the ambit of the invention. For example, the installation may take many different forms. The number of bracket members used in the installation may be increased, and their relative positions varied. Indeed, each bracket member may be offset vertically, horizontally or angularly with respect to one another. As such, the true scope of the invention is that as set out in the appended claims.

## Claims

1. A connector assembly (1) for fastening a structural member (2) to a supporting member (4), the connector assembly (1) comprising a bracket member (6) comprising a first lateral flange (10) which is to be fastened to a first lateral surface of the structural member (2), a second lateral flange (14) which is to be fastened to a second lateral surface of the structural member (2) and is substantially parallel to the first lateral flange (10), with a first lateral flange joining portion (16a) which, starting at an end portion of the first lateral flange (10), is arranged substantially perpendicular to the first lateral flange (10) and is connected thereto along a first connection zone (17), with a second lateral flange joining portion (16b) which, starting at an end portion of the second lateral flange (14), is substantially perpendicular to the second lateral flange (14) and is connected thereto along a second connection zone (19), wherein the first and second lateral flange joining portions (16a, 16b) extend between the first and second lateral flanges (10, 14) towards one another and below and/or beyond the first and second connection zones (17, 19), and the connector assembly (1) further comprising an anchor member (8) which can be connected to the first and second lateral flange joining portions (16a, 16b) and to the supporting member (4).

2. A connector assembly (1) for fastening a structural member (2) to a supporting member (4), the connector assembly (1) comprising a bracket member (6) comprising a first lateral flange (10) which is to be fastened to a first lateral surface of the structural member (2), a second lateral flange (14) which is to be fastened to a second lateral surface of the structural member (2) and is substantially parallel to the first lateral flange (10), and a lateral flange joining portion (16) which, starting at end portions of the first and second lateral flanges (10, 14), is arranged substantially perpendicular to the first and second lateral flanges (10, 14) and is connected thereto along first and second connection zones (17, 19), wherein the lateral flange joining portion (16) extends between the first and second lateral flanges (10, 14) and below and/or beyond the first and second connection zones (17, 19).

3. A connector assembly (1) according to claim 1, **characterised in that** in forming a bracket member (6) the lateral flange joining portions (16a, 16b) are formed in one piece and with the first and second lateral flanges (10,14) form a one-piece bracket member (6).

4. A connector assembly (1) according to any one of the preceding claims, **characterised in that** the anchor member (8) comprises an anchor bracket (22) to be connected to the lateral flange joining portion (16) or portions (16a, 16b) and extending parallel thereto in an installed condition, the anchor bracket (22) extending perpendicular to a base plate (20) of the anchor member (8).

5. A connector assembly (1) according to any one of the preceding claims, **characterised in that** the anchor member (8) comprises lateral reinforcing webs (24).

6. A connector assembly (1) according to claim 4 or claim 5, **characterised in that** the anchor bracket (22) and the lateral flange joining portion (16) or portions (16a, 16b) are provided with congruent fastening bores.

7. A connector assembly (1) for fastening a structural member (2) of one storey to a structural member (2') of another storey, the connector assembly (1) comprising two bracket members (6, 6'), each bracket member (6, 6') comprising a first lateral flange (10, 10') which is to be fastened to a first lateral surface of the structural member (2, 2'), a second lateral flange (14, 14') which is to be fastened to a second lateral surface of the structural member (2, 2') and is substantially parallel to the first lateral flange (10, 10'), with a first lateral flange joining portion (16a, 16a') which, starting at an end portion of the first lateral flange (10, 10'), is arranged substantially perpendicular to the first lateral flange (10, 10') and is connected thereto along a first connection zone (17, 17'), with a second lateral flange joining portion (16b, 16b') which, starting at an end portion of the second lateral flange (14, 14'), is substantially perpendicular to the second lateral flange (14, 14') and is connected thereto along a second connection zone (19, 19'), wherein the first and second lateral flange joining portions (16a, 16a', 16b, 16b') extend between the first and second lateral flanges (10, 10', 14, 14') towards one another and below and/or beyond the first and second connection zones (17, 17', 18, 18'), and the connector assembly (1) further comprising an anchor bracket (22) which can be connected to the respective first and second lateral flange joining portions (16a, 16a', 16b, 16b') of each bracket member (6, 6') and/or to a supporting member (4).

8. A connector assembly (1) as claimed in claim 7 wherein the anchor bracket (22) connects together the respective first and second lateral flange joining portions (16a, 16a', 16b, 16b') of each bracket member (6, 6') when overlapping each other or when spaced apart.

9. A connector assembly (1) for fastening a structural member (2) of one storey to a structural member (2') of another storey, the connector assembly (1) comprising two bracket members (6, 6'), each bracket member (6, 6') comprising a first lateral flange (10, 10') which is to be fastened to a first lateral surface of the structural member (2, 2'), a second lateral flange (14, 14') which is to be fastened to a second lateral surface of the structural member (2, 2') and being substantially parallel to the first lateral flange (10, 10'), and a lateral flange joining portion (16, 16') which, starting at end portions of the first and second lateral flanges (10, 10', 14, 14'), is arranged substantially perpendicular to the first and second lateral flanges (10, 10', 14, 14') and is connected thereto along first and second connection zones (17, 17', 18, 18'), wherein the lateral flange joining portion (16, 16') extends between the first and second lateral flanges (10, 10', 14, 14') and below and/or beyond the first and second connection zones (17, 17', 18, 18').

10. A connection between a structural member (2) and a supporting member (4) formed using the connector assembly (1) according to any one of the preceding claims.

11. A method of forming the connection of claim 10, the method comprising the steps of:
connecting the bracket (6, 6') to the structural member (2, 2'); and
connecting the bracket (6, 6') to the supporting member (4), wherein the steps may be effected in any order.

12. A method of forming the connection of claim 10, the method comprising the steps of:
connecting the bracket (6, 6') to the structural member (2, 2');
connecting the anchor member (8) to the supporting member (4); and
connecting the bracket (6, 6') to the anchor member (8), wherein the steps may be effected in any order.

13. A method of forming a connection between a structural member (2) and a supporting member (4), the method comprising the steps of:
connecting a bracket (6, 6') to the structural member (2, 2'); and
connecting the bracket (6, 6') to the supporting member (4), wherein the steps may be effected in any order.

14. A method of forming a connection between a structural member (2) and a supporting member (4), the method comprising the steps of:
connecting a bracket (6, 6') to the structural member (2, 2');
connecting an anchor member (8) to the supporting member (4); and
connecting the bracket (6, 6') to the anchor member (8), wherein the steps may be effected in any order.

15. A method of forming a connection between two structural members (2, 2'), the method comprising the steps of:
connecting a first bracket (6) to a first structural member (2);
connecting a second bracket (6') to a second structural member (2'); and
connecting the first bracket (6) to the second bracket (6'), wherein the steps may be effected in any order.
